# EUROPÄISCHE PATENTSCHRIFT

(11) **EP 2 374 604 B1**
(45) Veröffentlichungstag und Bekanntmachung des Hinweises auf die Patenterteilung: **27.06.2012**
(21) Anmeldenummer: 10159671.6
(22) Anmeldetag: 12.04.2010
(51) Int. Cl.: B29C 65/02, B65D 77/20

(54) **Foliendeckel zum Verschließen eines Behälters und Verfahren zu seiner Herstellung**
Film cover for closing a container and method for producing same
Couvercle à feuille destiné à la fermeture d'un récipient et son procédé de fabrication

(43) Veröffentlichungstag der Anmeldung: 12.10.2011
(73) Patentinhaber: Mondi AG, 1032 Wien (AT)
(72) Erfinder: Hösele, Nadine, 1210 Wien (AT)
(74) Vertreter: Schneider, Michael

(56) Entgegenhaltungen:
- WO-A1-01/83208
- WO-A1-99/58329

## Beschreibung

Die Erfindung betrifft einen Foliendeckel zum Verschließen eines Behälters gemäß dem Oberbegriff des Anspruchs 1.

Die Erfindung betrifft weiterhin ein Verfahren zur Herstellung des Foliendeckels gemäß dem ersten Absatz.

Die Erfindung betrifft weiterhin eine Verwendung von Verbundlagen für einen Foliendeckel gemäß dem ersten Absatz.

### HINTERGRUND

Ein Foliendeckel der eingangs im ersten Absatz angeführten Gattung ist beispielsweise aus der internationalen Patentanmeldung WO 2005/100197 A2 bekannt. Der offenbarte Foliendeckel besteht im Wesentlichen aus zwei Lagen eines Kunststoffmaterials. Bei der Herstellung des bekannten Foliendeckels wird in Bereichen des Foliendeckels die Verbundhaftung im Vergleich zu benachbarten Bereichen verändert. Jener Bereich, der eine erhöhte Verbundhaftung aufweist, dient zum Definieren einer Entnahmeöffnung. Der Bereich mit erhöhter Verbundhaftung wird durch Einwirkung von erwärmten Walzen auf die Verbundlagen des Foliendeckels erzeugt, wobei die Walzenoberfläche entsprechend den zu erzeugenden Öffnungsstrukturen strukturiert ist. Die Herstellung der inhomogenen Verbundhaftung zwischen den Lagen bringt den Nachteil eines zusätzlichen Arbeitsschrittes mit dem Einsatz von aufwändigen Werkzeugen mit sich.

WO 99/58329 offenbart ein Laminat als Deckel eines Behälters, wobei der Deckel einen gasdurchlässigen Film und einen gasundurchlässigen Film aufweist. Die beiden Filme sind aufeinander laminiert. Durch aufbringen einer Delaminierungskraft wird ein flächenhafter Riss in dem gasdurchlässigen Film erzeugt, so dass der gasundurchlässige Film vollständig von einem auf dem Behälter verbleibenden Teil des gasdurchlässigen Films abgelöst werden kann.

Auch aus der internationalen Patentanmeldung WO 01/83208 A1 ist ein Foliendeckel der eingangs im ersten Absatz angeführten Gattung bekannt. Im vorliegenden Fall ist zwischen zwei Lagen eine kleberhaltige Schicht vorgesehen, die als drucksensitive Klebeschicht beschrieben ist.

Weiterhin offenbart die europäische Patentanmeldung EP 1 577 226 A1 ebenfalls einen Foliendeckel der eingangs im ersten Absatz angeführten Gattung, wobei zwischen zwei Lagen des Deckels eine kaltsiegelnde Schicht vorgesehen ist, die als drucksensitiver Kleber beschrieben wird.

Für jene Lösungen, bei denen eine kleberhaltige Schicht oder eine kaltsiegelnde Schicht zwischen zwei Lagen des Foliendeckels vorgesehen ist, besteht das Problem, dass der Lebensmittelkontakt bzw. ein direkter Hautkontakt mit besagter Zwischenschicht nicht vollständig ausgeschlossen werden kann und daher nur bestimmte gesetzlichen Normen entsprechende Zwischenschichten zulässig sind. Zudem können Substanzen, wie beispielweise Latex, die oftmals in der Zwischenschicht enthalten sind, allergische Reaktionen bei einem Benutzer der Verpackung bei der Handhabung des Deckels auslösen.

Ein weiteres Problem besteht für alle vorstehend genannten Lösungen im Bereich der Grifflasche, mit deren Hilfe das Öffnen des Deckels bzw. der in dem Deckel integrierten Öffnung erfolgen kann. Im Bereich der Grifflasche muss der Foliendeckel so gestaltet sein, dass zumindest die obere Lage zum Zugreifen frei zugänglich ist. Dies wird üblicherweise derart gelöst, dass entweder zwischen zwei Lagen die Zwischenlage ausgespart ist oder dass überhaupt nur die obere Lage ausgebildet ist. Beide Lösungen haben sich als produktionstechnisch aufwändig und problematisch herausgestellt, weil keine durchgehenden Verbundlagen für den gesamten Foliendeckel zum Einsatz kommen können.

Es ist daher eine Aufgabe der Erfindung, einen Foliendeckel zum Verschließen eines Behälters, ein Verfahren zur Herstellung eines solchen Foliendeckels, sowie eine Verwendung von Verbundlagen für einen Foliendeckel bereitzustellen, sodass die vorstehend angeführten Probleme vermieden werden.

### ZUSAMMENFASSUNG DER ERFINDUNG

Diese Aufgabe wird zum einen durch einen Foliendeckel gemäß Anspruch 1 und zum anderen durch einen Behälter gemäß Anspruch 7 und durch ein Verfahren zur Herstellung eines Foliendeckels gemäß Anspruch 9, sowie durch eine Verwendung von Verbundlagen für einen Foliendeckel gemäß Anspruch 14 gelöst.

Der Gegenstand der Erfindung ist daher ein Foliendeckel zum Verschließen eines Behälters, wobei der Foliendeckel Verbundlagen aufweist, wobei die Verbundlagen eine erste Lagengruppe und eine zweite Lagengruppe aufweisen, wobei sowohl die erste Lagengruppe als auch die zweite Lagengruppe zumindest eine Lage eines ersten Typs und eine Lage eines zweiten Typs aufweisen und die Lage des ersten Typs der ersten Lagengruppe mit der Lage des ersten Typs der zweiten Lagengruppe vollflächig verblockt ist, wobei die verblockten Lagen des ersten Typs eine peel-fähige Eigenschaft aufweisen. Zudem weist zumindest die erste Lagengruppe, die bei einer bestimmungsgemäßen Verwendung des Foliendeckels dem Behälter zugewandt ist, eine die Peripherie einer Öffnung definierende Schwächungszone auf.

Zudem ist der Gegenstand der Erfindung ein Verfahren zur Herstellung eines Foliendeckels, wobei das Verfahren die folgenden Verfahrensschritte aufweist, nämlich: Erzeugen eines Kunststoff-Filmschlauchs durch Blas-Extrusion, wobei der Kunststoff-Filmschlauch eine Wand aufweist, die zumindest eine Lage eines ersten Typs an einer Innenseite des Kunststoff-Filmschlauchs und eine Lage eines zweiten Typs an einer Außenseite des Kunststoff-Filmschlauchs aufweist. Zwischen der Lage des ersten Typs und der Lage des zweiten Typs können auch weitere Lagen existieren.

Dabei wird in bekannter Weise zunächst in einem Extruder Granulat verflüssigt und eine Luftblase erzeugt, um die herum das verflüssigte Granulat in Schlauchform geblasen und der flüssige Kunststoff wieder verfestigt wird. Luftmenge/Granulatmenge und Abzugsgeschwindigkeit bestimmten die Dicke des Kunststoff-Filmschlauchs. Die Lagen der Wand des Kunststoff-Filmschlauchs werden durch mehrere Lagen von unterschiedlichem oder identischem Granulat erzeugt, wobei die Lagen bereits im flüssigen Zustand übereinander geschichtet werden. In Anhängigkeit von dem eingesetzten Granulat erhält man schließlich Lagen des gleichen Typs oder Lagen unterschiedlichen Typs.

Nach Erzeugung des Kunststoff-Filmschlauchs erfolgt ein Zusammenpressen des Kunststoff-Filmschlauchs, sodass ebene Verbundlagen eines Kunststofffilms bzw. einer Kunststofffolie entstehen, wobei die Verbundlagen eine erste Lagengruppe und eine zweite Lagengruppe aufweisen, welche Lagengruppen durch die Wand des Kunststoff-Filmschlauchs gebildet sind, wobei sowohl die erste Lagengruppe als auch die zweite Lagengruppe die Lage des ersten Typs und die Lage des zweiten Typs aufweisen und die Lage des ersten Typs der ersten Lagengruppe mit der Lage des ersten Typs der zweiten Lagengruppe vollständig verblockt wird. Es entsteht also eine Verbindung zwischen den Lagen des ersten Typs, die auf Adhäsion basiert.

Zu einem späteren Zeitpunkt erfolgt ein Erzeugen einer die Peripherie einer Öffnung definierenden Schwächungszone in zumindest der ersten Lagengruppe, die bei einer bestimmungsgemäßen Verwendung des Foliendeckels dem Behälter zugewandt ist.

Weiterhin ist der Gegenstand der Erfindung ein Behälter mit einem erfindungsgemäßen Foliendeckel, wobei ein Öffnungsrand des Behälters mit dem Foliendeckel über die Lage des zweiten Typs der ersten Lagengruppe verbunden ist.

Zudem ist der Gegenstand der Erfindung eine Verwendung von Verbundlagen für einen Foliendeckel zum Verschließen eines Behälters, wobei die Verbundlagen mit Hilfe eines Kunststoff-Filmschlauchs erzeugt werden, der durch Blas-Extrusion hergestellt wurde und nachfolgend flach zusammengepresst wurde, sodass die Verbundlagen eine erste Lagengruppe und eine zweite Lagengruppe aufweisen, wobei sowohl die erste Lagengruppe als auch die zweite Lagengruppe zumindest eine Lage eines ersten Typs und eine Lage eines zweiten Typs aufweisen und die Lage des ersten Typs der ersten Lagengruppen mit der Lage des ersten Typs der zweiten Lagengruppe vollflächig verblockt ist, und wobei die Verbundlagen eine die Peripherie einer Öffnung definierende Schwächungszone in zumindest der ersten Lagengruppe, die bei einer bestimmungsgemäßen Verwendung des Foliendeckels dem Behälter zugewandt ist, aufweisen.

Durch die erfindungsgemäßen Maßnahmen ist auf vorteilhafte Weise erreicht, dass in dem Foliendeckel miteinander verblockte Verbundlagen - die Lagen des ersten Typs - vorliegen, zwischen denen keine kleberhältigen oder kaltsiegelnden Schichten existieren, und dass genau diese verblockten Verbundlagen eine Öffnungsfunktion für den Foliendeckel bereitstellen. Da auch die erste Lagengruppe, die zum Erzeugen der Öffnung in dem Foliendeckel dient, frei von solchen kleberhältigen oder kaltsiegelnden Schichten ist, sind bekannte Probleme, die durch Lebensmittelkontakt bzw. Personenkontakt mit solchen kleberhältigen oder kaltsiegelnden Schichten bedingt sind, auszuschließen. Befindet sich der Foliendeckel in seinem geöffneten Zustand, sind folglich für den Benutzer nur solche Zonen des Deckels zugänglich, die frei von besagten kleberhältigen oder kaltsiegelnden Schichten sind. Die Tatschache, dass in anderen Schichten des Foliendeckels ggf. kleberhältige oder kaltsiegelnde Schichten existieren können, ändert nichts an dieser Situation, da diese anderen Schichten selbst bei geöffnetem Deckel nicht frei zugänglich sind.

Zudem weisen die Verbundlagen, die sich über den gesamten Foliendeckel hinweg durchgehend erstrecken, eine homogene Verbundhaftung auf, was durch den relative einfachen Herstellungsprozess bedingt ist. Bei diesem Prozess sind zusätzliche Arbeitsschritte, wie das Einbringen von kleberhältigen oder kaltsiegelnden Schichten oder das Erzeugen von Inhomogenitäten in der Verbundhaftung zum Erzeugen der Öffnungsfunktion, vermieden.

Bei einer üblichen Herstellungsmethode für Kunststofffolien bzw. Kunststofffilme mit Verbundlagen, die durch Co-Extrusion im Blasverfahren - auch Blas-Extrusion bezeichnet - hergestellt werden, wird ein im Blasverfahren erzeugter Kunststoff-Filmschlauch in Längsrichtung zerschnitten, sodass zwei Folienbahnen entstehen, von denen jede für sich separat für den Foliendeckel verwendet werden könnte. Zudem sind in dem Kunststoff üblicherweise Additive in der Rezeptur enthalten, die das Verblocken der auf Rollen gelagerten Folienbahnen verhindert. In Abkehr von dieser herkömmlichen Lehre wird entsprechend der erfindungsgemäßen Lehre nun jedoch das Verblocken der inneren Lagen des im Blasverfahren hergestellten Kunststoff-Filmschlauchs dazu verwendet, um die Verbundlagen des Foliendeckels zu realisieren, welche letztendlich die Öffnungsfunktion bereitstellen. Zu diesem Zweck wird die Rezeptur zumindest für die Lagen des ersten Typs, also die innere Lage des Kunststoff-Filmschlauchs so verändert, dass das Verblocken begünstigt ist. Die flach zusammengepresste innere Lage des Kunststoff-Filmschlauchs verblockt dann unter Ausnutzung der in dem zuvor erzeugten Kunststoff-Filmschlauch vorliegenden Resttemperatur, wobei die Verbundhaftung dieser verblockten Lagen der Verbundlagen geringer ist, als die Verbundhaftung der miteinander durch die Blas-Extrusion erzeugten und miteinander verbundenen Lagen des ersten Typs und des zweiten Typs. Die zu erzielende Verbundhaftung wird einerseits durch die Materialrezeptur und andererseits über die Parameter AntiBlocking-Additive, Reststemperatur und Druck beim aneinanderpressen gesteuert. Die Verbundhaftung der miteinander verblockten Lagen des ersten Typs ist zudem höher als die Reißfestigkeit der Verbundlagen in der Schwächungszone. Dadurch kann der die Peripherie der Öffnung begrenzte Bereich der Verbundlagen durch Krafteinleitung über die verblockten Lagen des ersten Typs aus den Verbundlagen herausgerissen werden, wobei der Deckel vom geschlossene in den geöffneten Zustand übergeht. Da die Form der Öffnung unabhängig vom Herstellungsprozess der verblockten Verbundlagen ist, kann sie völlig unproblematisch und sehr spezifisch an die jeweiligen Kundenbedürfnisse angepasst werden, was üblicherweise bei anderen Lösungen nicht oder nur mit erheblichem zusätzlichem Aufwand möglich ist.

In Abkehr von herkömmlichen Lösungen, bei denen die kleberhältigen Zwischenschichten oder die kaltsiegelnden Zwischenschichten zwischen zwei Lagen der Verbundlagen des Foliendeckels die Öffnungsfunktion des Foliendeckels ermöglichen bzw. bereitstellen, weisen gemäß der Erfindung die verblockten Lagen des ersten Typs peel-fähige Eigenschaften auf, die letztendlich die Öffnungsfunktion ermöglichen.

Dies bedeutet, dass sich bei einem Öffnen des Foliendeckels ein Bruch zwischen der ersten Lagengruppe und der zweiten Lagengruppe im Bereich der verblockten Lagen des ersten Typs entstehen bzw. sich ausbreiten kann. Durch das Verblocken wird nämlich eine Verbindung der Lagen des ersten Typs erzeugt, die eine geringere Verbundhaftung realisiert, als jene Verbundhaftung, die zwischen der Lage des ersten Typs und der Lage des zweiten Typs der jeweiligen Lagengruppe herrscht. Anders ausgedrückt bedeutet dies, dass die Verbundhaftung, die durch das Blas-Extrusionsverfahren zwischen der Lage des ersten Typs und der Lage des zweiten Typs erzeugt wird, stärker ist, als jene Verbundhaftung, die durch das Verblocken der beiden Lagen des ersten Typs der jeweiligen Lagengruppe vorliegt.

Die peel-fähigen Eigenschaften stehen auch im krassen Gegensatz zu bekannten Herstellungsverfahren von verblockten Verbundfolien, bei deren Herstellung die Prozessführung bzw. Steuerung der Prozessparameter so ausgestaltet ist, dass eine Peel-fähigkeit tunlichst vermieden wird. Die Herstellung solcher verblockter Verbundfolien geht nämlich von dem Problem aus, dass die durch Co-Extrusion hergestellte Anzahl der Lagen nicht ausreicht. Um die Lagenanzahl zu verdoppeln wird der Vorgang des Verblockens angewendet, wobei jedoch eine möglichst hohe Verbundhaftung zwischen den verblockten Lagen zu erzielen ist, die jener der durch Co-Extrusion erzeugten Lagen entspricht, um die geforderte Homogenität und Belastbarkeit der Verbundfolie zu gewährleisten.

Auch wenn vorangehend und nachfolgend immer von einer Lage des ersten Typs und einer Lage des zweiten Typs gesprochen wird, so sei an dieser Stelle der Vollständigkeit wegen erwähnt, dass in dem Blas-Extrusionsverfahren zusätzliche Zwischenlagen erzeugt werden können.

Weitere, besonders vorteilhafte Ausgestaltungen und Weiterbildungen der Erfindung ergeben sich aus den abhängigen Ansprüchen sowie der nachfolgenden Beschreibung. Dabei können der Behälter, das Herstellungsverfahren und insbesondere auch die erfindungsgemäße Verwendung entsprechend den abhängigen Ansprüchen zum Foliendeckel oder umgekehrt weitergebildet sein.

Wie erwähnt erfolgt das Verblocken der Lage des ersten Typs der ersten Lagengruppe mit der Lage des ersten Typs der zweiten Lagengruppe durch die eigene Resttemperatur des Kunststoff-Filmschlauchs, der zusammengepresst wird, um einen Teil der Kunststofffolie für den Foliendeckel zu erzeugen. Die so miteinander verblockte erste Lagengruppe und zweite Lagengruppe wird nach Abkühlung auf ein Trägermaterial aufgebracht. Als Foliendeckel wird somit die gesamte Struktur bestehend aus den knuststoffbasierten Lagengruppen und dem Trägermaterial bezeichnet. Das Trägermaterial kann beispielsweise Kunststoff, Papier oder Metall, wie z.B. Aluminium sein. Demgemäß weisen die Verbundlagen des Foliendeckels ein Trägermaterial auf und das Trägermaterial ist mit der zweiten Lagengruppe verbunden. Üblicherweise erfolgt das Verbinden mit dem Trägermaterial bevor besagte Schwächungszone erzeugt wird. Wenn das Trägermaterial als eine kunststoffbasiert Trägerfolie realisiert ist, dann ist diese Trägerfolie bevorzugt metallisiert. Es kann jedoch sowohl beim Trägermaterial als auch im Fall der Ausbildung als Trägerfolie auf die Metallisierung verzichtet werden. Mit Hilfe des Trägermaterials werden übliche Funktionen - üblicherweise als Barrierefunktion bezeichnet - wie Dichtheit gegenüber Wasserdampf oder Sauerstoff realisiert. Das Trägermaterial kann einschichtig, bevorzugt jedoch mehrschichtig ausgeführt sein.

In einer Ausbildungsform kann die Schwächungszone nur in einer Lage oder in mehreren Lagen der ersten Lagengruppe enthalten sein. Gemäß einer bevorzugten Ausführungsform ist die Schwächungszone durch eine Schwächungslinie gebildet, die mit Hilfe eines Laserstrahls oder durch mechanische Einwirkung eines Werkzeugs erzeugt wurde. Die Schwächungszone, reicht durch die erste und die zweite Lagengruppe hindurch bis zum Trägermaterial. Bei Verwendung eines Laserstrahls ist die Verwendung eines metallisierten Trägermaterials, insbesondere einer Trägerfolie als Trägermaterial von Vorteil, weil die Metallisierung zum Reflektieren des Laserstrahls dient bzw. verwendet wird, sodass auf zuverlässige Weise ein vollständiges Durchdringen der Verbundlagen mit dem Laserstrahl verhindert wird. Es muss also die Stärke des Laserstrahls bzw. die Dauer seiner Einwirkung nicht so genau kontrolliert werden, wie dies ohne Metallisierung der Fall wäre. Die Form der Schwächungszone bzw. Schwächungslinie kann kontinuierlich oder diskontinuierlich sein, wobei insbesondere auch unregelmäßige Abstände zwischen diskontinuierlichen Bereichen geschwächten Materials vorliegen können.

Gemäß einem weiteren Aspekt der Erfindung weist die Lage des zweiten Typs fest-siegelnde Eigenschaften in Bezug auf das Material des Behälters auf, wobei im fest versiegelten Zustand mit einem Öffnungsrand des Behälters eine höhere Verbundhaftung realisiert ist, als jene Verbundhaftung, die zwischen den verblockten Lagen des ersten Typs herrscht. Dies stellt sicher, dass bei einem Auseinanderreißen der Verbundlagen kein unbeabsichtigtes Abreißen des Foliendeckels von dem Öffnungsrand des Behälters erfolgen kann. Somit lässt sich gezielt die in dem Foliendeckel integrierte Öffnungsfunktion verwenden, um die Öffnung freizulegen.

In einer bevorzugten Ausführungsform ist das Trägermaterial mit der zweiten Lagengruppe durch Kleberkaschierung verbunden und die Kleberkaschierung realisiert eine höhere Verbundhaftung, als jene Verbundhaftung, die zwischen den verblockten Lagen des ersten Typs herrscht. Auch dieses Verhältnis der Verbundhaftungen zwischen den einzelnen Lagen der Verbundlagen stellt sicher, dass sich beim Öffnen des Foliendeckels der gewünschte Bruch in den Verbundlagen entlang der miteinander verblockten Lagen des ersten Typs ausbreitet.

In einer bevorzugten Ausführungsform weist der Foliendeckel eine Lasche zum Anfassen auf, um das Öffnen des Foliendeckels zu bewirken. Die Verbindung zwischen dem Foliendeckel und dem Öffnungsrand des Behälters ist bevorzugt durch Heißversiegelung erzeugt. Da sich die Verbundlagen vollflächig bzw. durchgehend durch den Foliendeckel hindurch erstrecken - also auch in der Lasche vorliegt, wird zunächst bei einem Anheben der Lasche ein Knick im Foliendeckel entlang des versiegelten Öffnungsrandes erzeugt. An diesem Öffnungsrand beginnt nun die erste Lagengruppe, die mit dem Öffnungsrand fest-versiegelt ist, einzureißen, wobei sich der Riss quer zu den Verbundlagen in den Verbundlagen nur bis hin zu den verblockten Lagen des ersten Typs ausbreitet. Sobald der Riss in den Verbundlagen den verblockten Bereich zwischen den Lagen des ersten Typs der ersten Lagengruppe erreicht, verändert sich die Richtung des Risses und es entsteht ein Bruch entlang der Verbundlagen des Foliendeckels, der sich entlang der Verblockungszone der verblockten Lagen des ersten Typs ausbreitet.

Bei einem weiteren Anheben der Lasche erreicht der Bruch in den Verbundlagen schließlich die Schwächungszone, welche die Peripherie der Öffnung in dem Foliendeckel definiert. Die Schwächungszone ist so beschaffen, dass sich der Bruch nicht in die Öffnung hinein fortsetzt, sondern in den Verbundlagen um die Öffnung herum der Schwächungszone folgend fortsetzt. Bei einem weiteren Anheben der Lasche wird also ein Bereich der ersten Lagengruppe, der durch die Schwächungszone begrenzt ist, aus der ersten Lagengruppe herausgerissen. Dadurch bildet sich in der auf dem Öffnungsrand des Behälters verbleibenden ersten Lagengruppe besagte Öffnung definierten Ausmaßes, welche ein dosiertes Abgeben von in dem Behälter enthaltenen Stoffen bzw. Produkten ermöglicht. Je nach Anwendungsfall kann der mit der Lasche verbundene Teil der Verbundlagen nun vollständig von der auf dem Öffnungsrand des Behälters verbleibenden ersten Lagengruppe abgerissen werden oder optional zum vorübergehenden Abdichten bzw. Abdecken der Öffnung auf die erste Lagengruppe zurückgeklappt werden.

Die vorstehend in Bezug auf den Foliendeckel angeführten Aspekte und Vorteile ergeben sich auf analoge Weise auch für den Behälter mit dem erfindungsgemäßen Foliendeckel, das Verfahren zur Herstellung des Foliendeckels, sowie die Verwendung der Verbundlagen für einen Foliendeckel.

Der Foliendeckel kann grundsätzlich aus Verbundmaterialen unterschiedlicher Materialien und/oder Kunststofftypen hergestellt werden. Bevorzugt sind die Lagen des ersten und des zweiten Typs aus co-extrudiertem Polyethylen (PE) gebildet. Das Trägermaterial kann beispielsweise auf Polyester (PET) basieren. Das Trägermaterial kann eine Schicht oder mehrere Schichten Kunststoff, metallische Schichten, Papierschichten oder eine Kombination von Kunststoffschichten mit metallischen Schichten und / oder auch Papierschichten usw. aufweisen oder daraus gebildet sein. Üblicherweise weist das Trägermaterial an der Außenfolienseite ein nicht siegelfähiges Material auf, welches gemäß Kundenvorgaben bedruckt werden kann. Bei einer Realisierung als Trägerfolie, die metallisiert ist, ist es vorteilhaft, wenn die Metallisierung auf der dem Behälter zugewandten Seite der Folie, also der Innenseite der Trägerfolie angeordnet ist. Als Kleber zum Befestigen der co-extrudierten PE Lagen mit dem Trägermaterial können beliebige in der Praxis bekannten Klebstoff zum Einsatz kommen mit denen die gewünschten Verbundhaftungsverhältnisse realisierbar sind.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugsziffern versehen. Es zeigen auf schematische Weise:
- Fig. 1: einen Querschnitt durch Verbundlagen, die für einen erfindungsgemäßen Foliendeckel verwendet werden.;
- Fig. 2: eine Ansicht des erfindungsgemäßen Foliendeckels in einer ersten Perspektive;
- Fig. 3: eine Ansicht des erfindungsgemäßen Foliendeckels in einer zweiten Perspektive im geöffneten Zustand auf einem Behälter.

### BESCHREIBUNG DER AUSFÜHRUNGSBEISPIELE

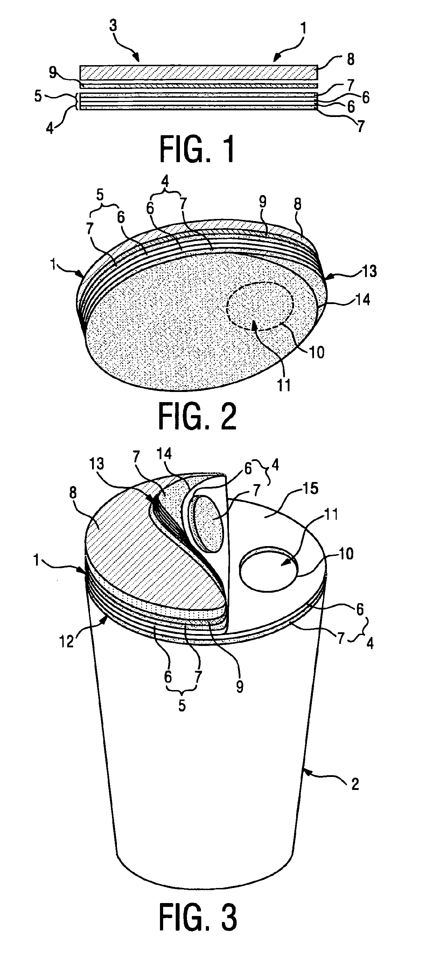

In der Fig. 1 ist von einem Foliendeckel 1, der zum Verschließen eines Behälters 2 (siehe Fig. 3) verwendet wird, ein Querschnitt durch seine Verbundlagen 3 dargestellt. Die Verbundlagen 3 weisen eine erste Lagengruppe 4 und eine zweite Lagengruppe 5 auf. Die erste Lagengruppe 4 weist eine Lage eines ersten Typs 6 und eine Lage eines zweiten Typs 7 auf. Auch die zweite Lagengruppe 5 weist eine Lage des ersten Typs 6 und des zweiten Typs 7 auf. Die beiden Lagen des ersten Typs 6 sind identisch. Ebenso sind die beiden Lagen des zweiten Typs 7 identisch.

Die beiden Lagengruppen 4 und 5 wurden durch Co-Extrusion im Blasverfahren hergestellt, wobei ein Kunststoff-Filmschlauch (nicht dargestellt) erzeugt wurde, dessen Wand durch die Lage des ersten Typs 6 (Innenwand des Kunststoff-Filmschlauchs) und durch die Lage des zweiten Typs 7 (Außenwand des Kunststoff-Filmschlauchs) gebildet ist. Der so erzeugte Kunststoff-Filmschlauch wurde anschließend zusammengepresst, sodass die an der Innenwand befindliche Lage des ersten Typs 6 mit Hilfe der Restwärme miteinander verblocken konnte. Im vorliegenden Fall handelt es sich bei den zwei Lagengruppen um co-extrudiertes PE. Um den Effekt des Verblockens zwischen den Lagen des ersten Typs 6 für eine Öffnungsfunktion des Foliendeckels 1 ausnutzen zu können, wurden in das Granulat zum Erzeugen der Lagen des ersten Typs 6 weniger Antiblocking-Substanzen zugeführt, als dies üblicherweise bei der Erzeugung einer co-extrudierten Folie der Fall ist, bei der das verblocken ein unerwünschter Effekt ist.

Die Verbundlagen 3 weisen weiters ein Trägermaterial 8 auf, das im vorliegenden Fall als eine kunststoffbasierte Trägerfolie 8 realisiert ist, die über eine Kleberschicht 9 mit der Lage des zweiten Typs 7 der zweiten Lagengruppe 5 verbunden ist. Die Trägerfolie 8 ist durch PET realisiert, das auf jener der zweiten Lagengruppe 5 zugewandten Seite metallisiert ist.

Der Foliendeckel 1 weist zudem eine Schwächungszone 10 auf, die eine kreisrunde Öffnung 11 definiert. Die Schwächungszone 10 ist durch eine Laserperforation gebildet, die durch die erste und die zweite Lagengruppe 4 und 5 hindurch bis zur Trägerfolie 8 reicht. Bei der Verwendung des Lasers zur Erzeugung der Laserperforation 10 schmilzt der Laserstrahl das Material der beiden Lagengruppen 4 und 5 und lässt es verdampfen, wobei der Laser jedoch nicht durch die Trägerfolie 8 hindurch dringt, sondern wegen der Metallisierung an ihr reflektiert wird.

Der Foliendeckel 1 ist in der Fig. 3 mit dem Behälter 2 verbunden dargestellt. Die Verbindung zwischen dem Foliendeckel 1 und dem Behälter 2 wurde durch ein Heiß-Versiegeln eines Öffnungsrandes 12 des Behälters 2 (nur schematisch angezeigt) mit der Lage des zweiten Typs 7 der ersten Lagengruppen 4 erzeugt. In diesem fest versiegelten Zustand liegt zwischen dem Öffnungsrand 12 und der damit versiegelten Lage des zweiten Typs 7 eine höhere Verbundhaftung vor, als jene Verbundhaftung, die zwischen den verblockten Lagen des ersten Typs 6 herrscht. Ebenso liegt zwischen der Trägerfolie 8 und der Lage des zweiten Typs 7 der zweiten Lagengruppen 5 eine höhere Verbundhaftung vor, als jene Verbundhaftung, die zwischen den verblockten Lagen des ersten Typs 6 herrscht.

Diese Verhältnisse der unterschiedlichen Verbundhaftung erlauben es nun, dass bei einem Anreißen an einer Lasche 13 ein flächiger Bruch zwischen den miteinander verblockten Lagen des ersten Typs 6 erzeugt werden kann. Die Lasche 13 ragt über den Öffnungsrand 12 des Behälters 2 hinaus und weist hinsichtlich ihrer Struktur die gleichen Verbundlagen 3 auf, wie der den Behälter abdichtende Teil der Verbundlagen 3 des Foliendeckels 1. Die Verbundlagen 3 verlaufen also vollflächig im gesamten Foliendeckel 1 inklusive der Lasche 13.

Ein bereits geöffneter Behälter - also mit aktivierter Öffnungsfunktion - ist in der Fig. 3 dargestellt. In dieser Darstellung wurde die Lasche 13 bereits soweit angehoben bzw. in der Zeichenebene nach links gezogen, dass die Öffnung 11 in der ersten Lagengruppe 4 geöffnet wurde. Nachfolgend ist auf den Vorgang des Öffnens im Detail eingegangen.

Ausgehend von dem verschlossenen Behälter, von dem die Lasche 13 in der Zeichenebene nach rechts weg stehen würde, entsteht beim Anheben der Lasche 13 zunächst ein Knick in den Verbundlagen 3, der sich entlang des Öffnungsrandes 12 erstreckt. Bei einem weiteren Anheben bzw. Anreißen an der Lasche 13 entsteht zunächst an der Unterseite der Verbundlagen 3 ein Riss in der ersten Lagengruppe 4, der sich entlang einer Risslinie 14 ausbreitet. Der Verlauf der Risslinie ist im Wesentlichen durch den äußeren Rand des Öffnungsrandes 12 definieret. Der Verlauf des Risses kann jedoch auch durch eine Materialschwächung vorgegeben sein, die wiederum durch einen Laserstrahl oder durch andere mechanische Mittel in die Verbundlagen eingebracht werden kann.

Bei weiterem Anreißen an der Lasche 13 pflanzt sich der Riss quer zu dem lagenförmigen Verlauf der Verbundlagen 3 in das Innere der Verbundlagen 3 fort, bis er schließlich die Zone erreicht, in der die beiden Lagen des ersten Typs 6 miteinander verblockt sind. Ab diesem Zeitpunkt breitet sich der Riss flächig entlang einer Bruchfläche 15 durch die Verblockungszone der miteinander verblockten Lagen des ersten Typs 6 aus, bis schließlich die in der Fig. 3 visualisierte Situation des geöffneten Behälters 2 erreicht ist. Nach vollbrachter Freilegung der Öffnung 11 ist deutlich zu sehen, dass aus der an dem Öffnungsrand haftenden ersten Lagengruppe 4 ein im Bereich der Lasche 13 befindlicher Teil und ein im Bereich der Öffnung 11 befindlicher Teil herausgerissen wurde. Die herausgerissenen Teile haften auf dem hochgeklappten Teil des Foliendeckels 1.

Im Unterschied zu bekannten Lösungen, die zum Bereitstellen der Öffnungsfunktion bei einem Foliendeckel kleberhaltige oder kaltsiegelnde Zwischenschichten zwischen zwei Lagen von Verbundlagen benutzen würden, kommt die erfindungsgemäße Lösung zur Realisierung der Öffnungsfunktion ohne solche Zwischenlagen aus und macht sich die verblockte Lagenstruktur zu Nutze, um die Öffnungsfunktion bereitzustellen. Die Kleberschicht 9 ist nicht frei zugänglich. Die Öffnungsfunktion wird also durch die physikalischen Eigenschaften der miteinander verblockten Lagen des ersten Typs 6 erhalten. Der so hergestellte Foliendeckel 1 weist zur Realisierung der Lasche 13 die gleiche Lagenstruktur auf, wie jene Lagenstruktur, die durch den Prozess des Blas-Extrudierens und des Zusammenpressens des erzeugten Kunststoff-Filmschlauchs erhalten wurde. Es sind also für die Realisierung der Funktion der Aufreißinitiierung keine komplexen Ausbildungen im Bereich der Lasche 13 und daher auch keine weiteren Arbeitsschritte zu deren Herstellung nötig. Diese Ausgestaltung der Lasche 13 erleichtert auch das Anfassen und Handhaben der Lasche 13 gegenüber bekannten Laschenlösungen. Somit lässt sich auch die Form der Lasche 13 völlig unproblematisch an Kundenbedürfnisse anpassen.

Der Foliendeckel 1 kann also unproblematisch aus einer Folienbahn ausgestanzt werden und in einem Magazin abgelegt werden, um so einer späteren Verarbeitung nach einem Transport bzw. einer Lagerung zugeführt zu werden, oder direkt verarbeitet werden.

Es wird abschließend noch einmal darauf hingewiesen, dass es sich bei der vorhergehend detailliert beschriebenen Ausführungsform nur um ein Ausführungsbeispiel handelt, welches vom Fachmann in verschiedenster Weise modifiziert werden kann, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können die Proportionen der dargestellten Merkmale variieren, ohne dass von dem Konzept der Erfindung abgewichen wird.

### BEZUGSZEICHENLISTE

- 1: Foliendeckel
- 2: Behälter
- 3: Verbundlagen
- 4: erste Lagengruppe
- 5: zweite Lagengruppe
- 6: Lage des ersten Typs
- 7: Lage des zweiten Typs
- 8: Trägermaterial, Trägerfolie
- 9: Kleberschicht
- 10: Schwächungszone
- 11: Öffnung
- 12: Öffnungsrand des Behälters
- 13: Lasche
- 14: Risslinie
- 15: Bruchfläche durch Verblockungszone

## Patentansprüche

1. Foliendeckel (1) zum Verschließen eines Behälters (2),
wobei der Foliendeckel (1) Verbundlagen (3) aufweist, wobei die Verbundlagen (3) eine erste Lagengruppe (4) und eine zweite Lagengruppe (5) aufweisen, **dadurch gekennzeichnet, dass** sowohl die erste Lagengruppe (4) als auch die zweite Lagengruppe (5) zumindest eine Lage eines ersten Typs (6) und eine Lage eines zweiten Typs (7) aufweisen und die Lage des ersten Typs (6) der ersten Lagengruppe (4) mit der Lage des ersten Typs (6) der zweiten Lagengruppe (5) vollflächig verblockt ist, wobei die verblockten Lagen des ersten Typs (6) peel-fähige Eigenschaften aufweisen, und
wobei zumindest die erste Lagengruppe (4), die bei einer bestimmungsgemäßen Verwendung des Foliendeckels (1) dem Behälter (2) zugewandt ist, eine die Peripherie einer Öffnung (11) definierende Schwächungszone (10) aufweist.

2. Foliendeckel (1) nach Anspruch 1, wobei die Verbundlagen (3) ein Trägermaterial (8), insbesondere eine Trägerfolie (8), aufweisen und das Trägermaterial (8) mit der zweiten Lagengruppe (5) verbunden ist und, insbesondere wenn als Trägerfolie (8) ausgebildet, gegebenenfalls metallisiert ist.

3. Foliendeckel (1) nach Anspruch 2, wobei die Schwächungszone (10) durch eine Schwächungslinie gebildet ist, die mit Hilfe eines Laserstrahls oder durch eine mechanische Einwirkung eines Werkzeugs erzeugt wurde, und durch die erste und die zweite Lagengruppe (4, 5) hindurch bis zum Trägermaterial (8) reicht.

4. Foliendeckel (1) nach einem der vorangehenden Ansprüche, wobei die Lage des zweiten Typs (7) fest-siegelnde Eigenschaften in Bezug auf ein Material des Behälters (2) aufweist und im fest versiegelten Zustand mit einem Öffnungsrand (12) des Behälters (2) eine höhere Verbundhaftung realisiert, als jene Verbundhaftung, die zwischen den verblockten Lagen des ersten Typs (6) herrscht.

5. Foliendeckel (1) nach einem der vorangehenden Ansprüche 2 bis 4, wobei das Trägermaterial (8) mit der zweiten Lagengruppe (5) durch Kleberkaschierung verbunden ist und die Kleberkaschierung eine höhere Verbundhaftung realisiert, als jene Verbundhaftung, die zwischen den verblockten Lagen des ersten Typs (6) herrscht.

6. Behälter (2) mit einem Foliendeckel (1) nach einem der Ansprüche 1 bis 5, wobei ein Öffnungsrand (12) des Behälters (2) mit dem Foliendeckel (1) über die Lage des zweiten Typs (7) der ersten Lagengruppe (4) verbunden ist.

7. Behälter (2) nach Anspruch 6, wobei die Verbindung zwischen dem Foliendeckel (1) und dem Öffnungsrand (12) durch Heißversiegelung erzeugt ist.

8. Verfahren zur Herstellung eines Foliendeckels (1) gemäß Anspruch 1, wobei das Verfahren die folgenden Verfahrensschritt aufweist, nämlich:
- Erzeugen eines Kunststoff-Filmschlauchs durch Blas-Extrusion, wobei der Kunststoff-Filmschlauch eine Wand aufweist, die zumindest eine Lage eines ersten Typs (6) an einer Innenseite des Kunststoff-Filmschlauchs und eine Lage eines zweiten Typs (7) an einer Außenseite des Kunststoff-Filmschlauchs aufweist, und
- Zusammenpressen des Kunststoff-Filmschlauchs, sodass ebene Verbundlagen entstehen, wobei die Verbundlagen eine erste Lagengruppe (4) und eine zweite Lagengruppe (5) aufweisen, welche Lagengruppen (4, 5) durch die Wand des Kunststoff-Filmschlauchs gebildet sind, wobei sowohl die erste Lagengruppe (4) als auch die zweite Lagengruppe (5) die Lage des ersten Typs (6) und die Lage des zweiten Typs (7) aufweisen und die Lage des ersten Typs (6) der ersten Lagengruppe (4) mit der Lage des ersten Typs (6) der zweiten Lagengruppe (5) vollflächig verblockt wird, und
- Erzeugen einer die Peripherie einer Öffnung (11) definierenden Schwächungszone (10) in zumindest der ersten Lagengruppe (4), die bei einer bestimmungsgemäßen Verwendung des Foliendeckels (1) dem Behälter (2) zugewandt ist.

9. Verfahren nach Anspruch 8, wobei vor dem Erzeugen der Schwächungszone (10) die Verbundlagen (3) auf ein - gegebenenfalls metallisiertes - Trägermaterial (8), insbesondere eine Trägerfolie (8), derart aufgebracht werden, dass das Trägermaterial (8) mit der zweiten Lagengruppen (5) verbunden ist und bei einer bestimmungsgemäßen Verwendung des Foliendeckels (1) von dem Behälter (2) abgewandt ist.

10. Verfahren nach Anspruch 9, wobei durch Einwirkung eines Laserstrahls oder durch mechanische Einwirkung eines Werkzeugs eine die Schwächungszone (10) bildende Schwächungslinie erzeugt wird, wobei die Schwächungszone durch die erste und die zweite Lagengruppe (4, 5) hindurch bis zu dem Trägermaterial (8) reicht.

11. Verfahren nach Anspruch 9, wobei das Trägermaterial (8) mit der zweiten Lagengruppe (5) durch Kleberkaschierung verbunden wird.

12. Verfahren nach einem der Ansprüche 8 bis 11, wobei der Foliendeckel (1) aus den Verbundlagen (3) ausgestanzt wird.

13. Verwendung von Verbundlagen (3) für einen Foliendeckel (1) zum Verschließen eines Behälters (2),
wobei die Verbundlagen (3) mit Hilfe eines Kunststoff-Filmschlauchs erzeugt wurden, der durch Blas-Extrusion hergestellt wurde und nachfolgend flach zusammengepresst wurde, sodass die Verbundlagen (3) eine erste Lagengruppe (4) und eine zweite Lagengruppe (5) aufweisen, wobei sowohl die erste Lagengruppe (4) als auch die zweite Lagengruppe (5) zumindest eine Lage eines ersten Typs (6) und eine Lage eines zweiten Typs (7) aufweisen und die Lage des ersten Typs (6) der ersten Lagengruppe (4) mit der Lage des ersten Typs (6) der zweiten Lagengruppe (5) vollflächig verblockt ist, und
wobei die Verbundlagen (3) eine die Peripherie einer Öffnung (11) definierende Schwächungszone (10) in zumindest der ersten Lagengruppe (4), die bei einer bestimmungsgemäßen Verwendung des Foliendeckels (1) dem Behälter (2) zugewandt ist, aufweisen.

## Claims

1. A foil lid (1) for closing a container (2),
wherein the foil lid (1) comprises composite layers (3), wherein the composite layers (3) comprise a first layer group (4) and a second layer group (5),
**characterised in that** both the first layer group (4) and the second layer group (5) comprise at least one layer of a first type (6) and one layer of a second type (7), and the layer of the first type (6) of the first layer group (4) is blocked over its entire area with the layer of the first type (6) of the second layer group (6), wherein the blocked layers of the first type (6) have peelable properties and wherein at least the first layer group (4), which faces the container (2) when the foil lid (1) is used as intended, comprises a weakening zone (10) which defines the periphery of an opening (11).

2. The foil lid (1) according to claim 1, wherein the composite layers (3) comprise a carrier material (8), in particular a carrier foil (8), and the carrier material (8) is connected to the second layer group (5) and, in particular when configured as a carrier foil (8), is optionally metallised.

3. The foil lid (1) according to claim 2, wherein the weakening zone (10) is formed by a weakening line which has been produced with the aid of a laser beam or by a mechanical action of a tool and extends through the first and second layer groups (4, 5) as far as the carrier material (8).

4. The foil lid (1) according to any one of the preceding claims, wherein the layer of the second type (7) has firmly sealing properties in relation to a material of the container (2), and achieves a greater composite adhesion in the firmly sealed state with an opening edge (12) of the container (2) than the composite adhesion prevailing between the blocked layers of the first type (6).

5. The foil lid (1) according to any one of the preceding claims 2 to 4, wherein the carrier material (8) is connected to the second layer group (5) by adhesive lamination and the adhesive lamination achieves a greater composite adhesion than the composite adhesion prevailing between the blocked layers of the first type (6).

6. A container (2) with a foil lid (1) according to any one of claims 1 to 5, wherein an opening edge (12) of the container (2) is connected to the foil lid (1) by means of the layer of the second type (7) of the first layer group (4).

7. The container (7) according to claim 6, wherein the connection between the foil lid (1) and the opening edge (12) is produced by hot sealing.

8. A method of producing a foil lid (1) according to claim 1, wherein the method comprises the following method steps, namely:
- producing a plastic film tube by extrusion blow moulding, wherein the plastic film tube comprises a wall which comprises at least one layer of a first type (6) on an inner side of the plastic film tube and one layer of a second type (7) on an outer side of the plastic film tube, and
- compressing the plastic film tube so that flat composite layers are produced, wherein the composite layers comprise a first layer group (4) and a second layer group (5), which layer groups (4, 5) are formed by the wall of the plastic film tube, wherein both the first layer group (4) and the second layer group (5) comprise the layer of the first type (6) and the layer of the second type (7), and the layer of the first type (6) of the first layer group (4) is blocked over its entire area with the layer of the first type (6) of the second layer group (5), and
- producing a weakening zone (10) which defines the periphery of an opening (11) in at least the first layer group (4) which faces the container (2) when the foil lid (1) is used as intended.

9. The method according to claim 8, wherein, before the weakening zone (10) is produced, the composite layers (3) are applied to an - optionally metallised - carrier material (8), in particular a carrier foil (8), in such a manner that the carrier material (8) is connected to the second layer groups (5) and faces away from the container (2) when the foil lid (1) is used as intended.

10. The method according to claim 9, wherein a weakening line which forms the weakening zone (10) is produced by the action of a laser beam or by the mechanical action of a tool, wherein the weakening zone extends through the first and the second layer group (4, 5) as far as the carrier material (8).

11. The method according to claim 9, wherein the carrier material (8) is connected to the second layer group (5) by adhesive lamination.

12. The method according to any one of claims 8 to 11, wherein the foil lid (1) is punched out of the composite layers (3).

13. Use of composite layers (3) for a foil lid (1) for closing a container (2), wherein the composite layers (3) were produced with the aid of a plastic film tube which has been produced by extrusion blow moulding and subsequently pressed flat so that the composite layers (3) comprise a first layer group (4) and a second layer group (5), wherein both the first layer group (4) and the second layer group (5) comprise at least one layer of a first type (6) and a layer of a second type (7), and the layer of the first type (6) of the first layer group (7) is blocked over its entire area with the layer of the first type (6) of the second layer group (5), and
wherein the composite layers (3) comprise a weakening zone (10) which defines the periphery of an opening (11) in at least the first layer group (4), which faces the container (2) when the foil lid (1) is used as intended.

## Revendications

1. Couvercle en film (1) pour fermer un récipient (2),
le couvercle en film (1) comportant des couches composites (3), les couches composites (3) comportant un premier groupe de couches (4) et un deuxième groupe de couches (5), **caractérisé en ce qu'**aussi bien le premier groupe de couches (4) que le deuxième groupe de couches (5) comportent aussi au moins une couche d'un premier type (6) et une couche d'un deuxième type (7) et la couche du premier type (6) du premier groupe de couches (4) est bloquée à pleine surface avec la couche du premier type (6) du deuxième groupe de couches (5) les couches bloquées du premier type (6) ayant des caractéristiques pelables et au moins le premier groupe de couches (4), qui lors d'une utilisation conforme du couvercle en film (1) fait face au récipient (2) comportant une zone d'affaiblissement (10) définissant la périphérie d'une ouverture (11).

2. Couvercle en film (1) selon la revendication 1, les couches composites (3) comportant une matière de support (8), notamment un film de support (8), et la matière de support (8) étant reliée avec le deuxième groupe de couches (5) et notamment si elle est conçue sous la forme d'un film de support (8), étant métallisée le cas échéant.

3. Couvercle en film (1) selon la revendication 2, la zone d'affaiblissement (10) étant formée par une ligne d'affaiblissement qui à été créée à l'aide d'un faisceau laser ou par action mécanique d'un outil et traversant le premier et le deuxième groupe de couches (4, 5) jusqu'à la matière de support (8).

4. Couvercle en film (1) selon l'une quelconque des revendications précédentes, la couche du deuxième type (7) ayant des caractéristiques de fermeture par scellement en rapport avec une matière du récipient (2) et à l'état fermé par scellement, réalisant avec un bord de l'ouverture (12) du récipient (2) une adhérence de liaison plus forte que l'adhérence de liaison qui règne entre les couches bloquées du premier type (6).

5. Couvercle en film (1) selon l'une quelconque des revendications précédentes 2 à 4, la matière de support (8) étant reliée avec le deuxième groupe de couches (5) par contrecollage et le contrecollage réalisant une adhérence de liaison plus forte que l'adhérence de liaison qui règne entre les couches bloquées du premier type (6).

6. Récipient (2) avec un couvercle en film (1) selon l'une quelconque des revendications 1 à 5, un bord de l'ouverture (12) du récipient (2) étant relié avec le couvercle en film (1) par l'intermédiaire de la couche de deuxième type (7) du premier groupe de couches (4).

7. Récipient (2) selon la revendication 6, la liaison entre le couvercle en film (1) et le bord de l'ouverture (12) étant créée par thermoscellement.

8. Procédé de fabrication d'un couvercle en film (1) selon la revendication 1, le procédé comportant les étapes de procédé suivantes, à savoir :
- création d'un film tubulaire en matière plastique par extrusion soufflage, le film tubulaire en matière plastique comportant une paroi, qui comporte au moins une couche d'un premier type (6) sur une face intérieure du film tubulaire en matière plastique et une couche d'un deuxième type (7) sur une face extérieure du film tubulaire en matière plastique et
- compression du film tubulaire en matière plastique, de sorte à donner naissance à des couches composites planes, les couches composites comportant un premier groupe de couches (4) et un deuxième groupe de couches (5), lesquels groupes de couches (4, 5) étant formés par la paroi du film tubulaire en matière plastique, aussi bien le premier groupe de couches (4) qu'également le deuxième groupe de couches (5) comportant la couche du premier type (6) et la couche du deuxième type (7) et la couche du premier type (6) du premier groupe de couches (4) étant bloquée à pleine surface avec la couche du premier type (6) du deuxième groupe de couches (5) et
- création d'une zone d'affaiblissement (10) définissant la périphérie d'une ouverture (11) dans au moins le premier groupe de couches (4), qui lors d'une utilisation conforme du couvercle en film (1) fait face au récipient (2).

9. Procédé (2) selon la revendication 8, avant la création de la zone d'affaiblissement (10), les couches composites (3) étant appliquées sur une matière de support (8) (métallisée le cas échéant), notamment sur un film de support (8), de sorte que la matière de support (8) soit reliée avec le deuxième groupe de couches (5) et lors d'une utilisation conforme du couvercle en film (1) soit opposée au récipient (2).

10. Procédé (2) selon la revendication 9, par l'action d'un faisceau laser ou par l'action mécanique d'un outil, une ligne d'affaiblissement formant la zone d'affaiblissement (10) étant créée, la zone d'affaiblissement traversant le premier et le deuxième groupes de couches (4, 5) jusqu'à la matière de support (8).

11. Procédé (2) selon la revendication 9, la matière de support (8) étant reliée par contrecollage avec le deuxième groupe de couches (5).

12. Procédé (2) selon l'une quelconque des revendications 8 à 11, le couvercle en film (1) étant découpé dans les couches composites (3).

13. Utilisation de couches composites (3) pour un couvercle en film (1) pour la fermeture d'un récipient (2),
les couches composites (3) ayant été créées à l'aide d'un film tubulaire en matière plastique qui a été fabriqué par extrusion soufflage et comprimé à plat par la suite, de sorte que les couches composites (3) comportent un premier groupe de couches (4) et un deuxième groupe de couches (5), aussi bien le premier groupe de couches (4) qu'également le deuxième groupe de couches (5) comportant au moins une couche d'un premier type (6) et une couche d'un deuxième type (7) et la couche du premier type (6) du premier groupe de couches (4) étant bloquée à pleine surface avec la couche du premier type (6) du deuxième groupe de couches (5) et
- les couches composites (3) comportant une zone d'affaiblissement (10) définissant la périphérie d'une ouverture (11) dans au moins le premier groupe de couches (4), qui lors d'une utilisation conforme du couvercle en film (1) fait face au récipient (2).
